# EUROPEAN PATENT APPLICATION

(11) **EP 1 046 765 A1**
(43) Date of publication of application: **25.10.2000**
(21) Application number: 99953997.6
(22) Date of filing: 05.11.1999
(51) Int. Cl.: E04F 15/02

(54) **PART FOR SUPPORTING AND FIXING BOARDS USED TO COVER FLOORS AND WALLS INSIDE AND OUTSIDE BUILDINGS**

(30) Priority: 05.11.1998 ES 9802788 U
(71) Applicant: Wicanders, S.A., 08028 Barcelona (ES)
(72) Inventor: SANCHEZ TEJEDOR, Joaquin, Silvino, E-12004 Castellon (ES)
(74) Representative: Maldonado Jordan, Julia
(86) International application number: ES9900356
(87) International publication number: WO0028170

(57) **Abstract**

The part (1) for supporting and fixing boards used to cover floors and walls is comprised of a metal strip which has an open trapezoidal cross profile (2) with two inclined and divergent branches (3) and with a central branch (4) wherein is provided a drilled hole (4 ) for positioning a screw (5) which is intended to fix the part (1) to the footing piece (6). The inclined branches (3) of the part (1) are inserted into longitudinal lengthwise slots (8) with matching shape and arrangement. The slots are cut into the sides of the boards (7) forming the covering; such system enables to reduce the separation (9) between two consecutive boards (7) and provides a more resistant attachment.

## Description

### FIELD OF THE INVENTION

This invention refers to a part for supporting and fixing boards used to cover floors and walls inside and outside buildings.

In these days a fast and convenient assembly is required for structures like stands and similar.

This assembly and fastening is carried out on footing or wall pieces without the need of using partly exposed nails or screws.

### BACKGROUND OF THE INVENTION

Several embodiments of parts intended for the same purpose as the one here proposed are already known in the market. In general they consists in a member provided with holding tabs or appendages intended to be inserted into lengthwise grooves provided at the laterals of a series of adjacent side by side boards to be attached on a footing or wall support pieces, a plurality of said members forming rows on the wall or footing supporting pieces on which they are attached. Examples of such a prior art parts or fittings are detailed in the following patents ES-A-1029540 U, and JP-A-10238074.

In said prior art fittings the cited lateral lengthwise grooves provided at the lateral of the boards are parallel to the surface of the board, so that it is the risk of water being retained in said grooves, mainly when the boards being placed on a footing pieces. On the other side the resistance against the boards being pulled out when covering walls or against the pressure or to be pulled out when covering footing pieces is not satisfactory because said lateral grooves determine that only one part of the board resist the extraction or pressure effort.

The invention submits a special part for supporting and fixing boards comprising two inclined and divergent branches acting as said holding tabs which are received in the said lengthwise grooves or slots which are also inclined.

This means that no problem arises with regard to water retention and a better resistance both against pressure and pulling out efforts is obtained.

Therefore this invention has on the hitherto known techniques the following advantages:
- Simplicity of the parts.
- Inexpensive manufacture of the parts.
- Fast assembly of the wooden boards of standard or mini size without incurring in errors.
- Prevention of the usual displacements of the boards.
- A higher accuracy of the fastening on the footing pieces.
- Better concealment.
- Lesser exposure of the metallic parts.
- A lower lever effect on the base exerting a higher force.
- Simplification of the work on the wooden boards in one single cut.
- Permits to adjust a broader or narrower gap between the wooden boards.
- It permits the fastening of boards or other materials to each other or to another material.

### BRIEF SUMMARY OF THE INVENTION

According to the invention the part is located on fixed or floating footing or wall pieces which may be made of wood, metal, etc. The nature and form of the said footing pieces is not part of the present invention.

The supporting and fixing part which is the subject matter of the invention is comprised of a metal strip which has an open trapezoidal cross profile with two inclined branches or sides forming preferably a 45° angle, which angle may vary according to practical use.

The central branch of the metallic part has a central hole to permit the attachment of the part to the footing pieces by means of screws.

The arrangement of the footing pieces and the corresponding parts permits the securing of boards having at its sides straight lengthwise slots or grooves.

Said lengthwise slots will have the same inclination than the inclined sides of the parts and they will have a width sufficient to permit the engagement of said inclined sides of the corresponding parts, which are arranged in rows.

With the aim of a better understanding of the invention and its utilization a practical embodiment will be explained in the following, by way of a non limiting example, according to the attached drawings, in which:

### BRIEF DESCRIPTION OF THE DRAWINGS

Figure 1 is a perspective view of the supporting and fixing part of this invention;
Figure 2 shows a perspective view of the arrangement, securement and use of the inventive part applied to the assembly of boards to the footing pieces:
Figure 3 shows the form in which a board is mounted between two attachment parts according to the invention;
Figure 4 shows a front view of the part of figure 1;
Figure 5 shows a front view of the part of figure 1;

### DETAILED DESCRIPTION OF A PREFERRED EMBODIMENT

The part (1) is a metal strip which has an open trapezoidal cross profile (2) which inclined branches (3) forming a 45° angle with the horizontal.

The central branch (4) of the part (1) has a hole (4a) by means of which the part may be secured to the footing pieces (6) by means of screws (5).

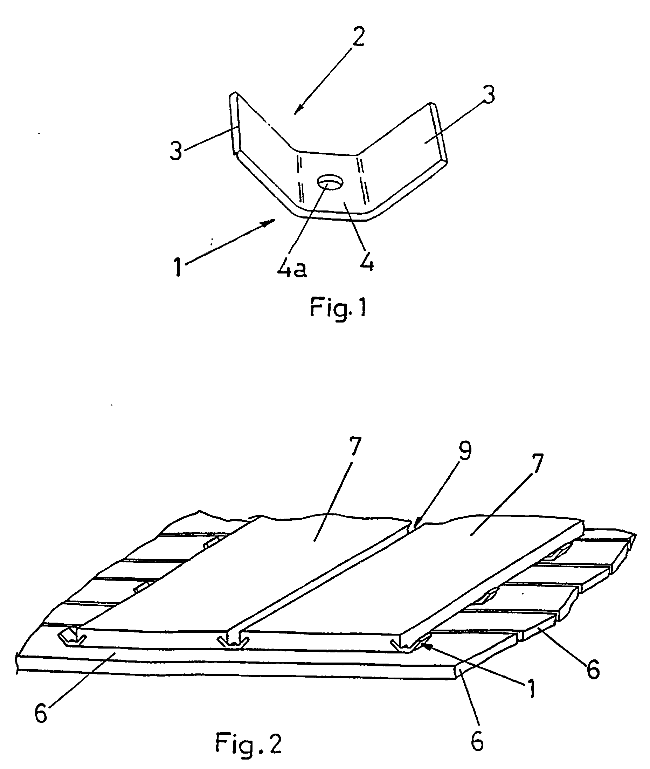

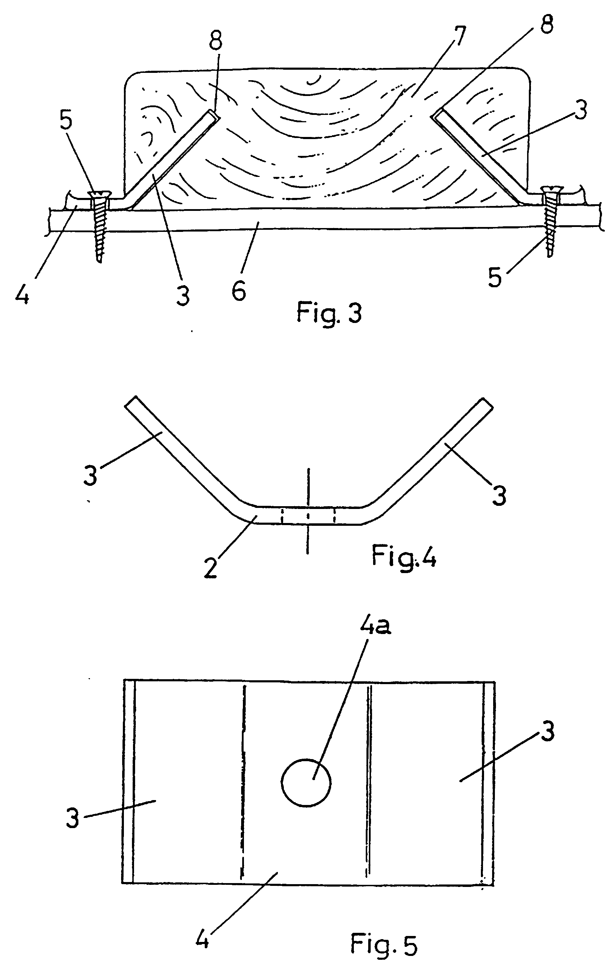

The boards (7) to be mounted have at each of its laterals (which should be placed side by side) lengthwise slots (8) with the same inclination than the sides or branches (3) of each of the parts, so that as shown in figures 2 and 3, the boards (7) are secured to the inclined branches of the parts (1) forming rows on the footing pieces (6), on which they are attached.

A gap (9) is formed between each two boards. The gap (9) between each two adjacent boards (7) is dependent on the depth to which said part (2) is placed with regard to the support piece (6) surface.

After having described the invention and the way to carry out the same in practical use, the applicants wish to point out that the embodiment which has been described in the foregoing and depicted in the drawings may undergo changes which do not depart from the essential characteristics of the invention.

## Claims

1. Part for supporting and fixing boards used to cover floors and walls inside and outside buildings, comprising a member provided with holding tabs or appendages intended to be inserted into straight lengthwise slots or grooves provided at each of the laterals of a series of adjacent boards with a parallel orientation to be attached on a footing or wall support pieces (6), a plurality of said members forming rows on said support pieces (6) characterized in that it is comprised of a metal strip (2) having an open trapezoidal cross profile with two inclined and divergent branches acting as said holding tabs and with a central branch (4) wherein is provided a drilled hole (4a) for the passage of a screw (5) which is intended to fix the part (1) to a footing piece (6) said boards (7) having lateral lengthwise slots (8) with a corresponding form and arrangement to the one of the inclined branches of each of the parts in order to be received by insertion and engaging said lengthwise slots (8) of the boards forming the covering, a narrow gap being left between each two adjacent boards (7).

2. Part according to claim 1, characterised in that each one of said inclined branches of the part (2) forms an acute angle with the horizontal.

3. Part, according to claim 1, characterised in that the gap between each two adjacent boards (7) is dependent on the depth to which said part (2) is placed with regard to the support piece (6) surface.
